**Europäisches Patentamt**

(19) **European Patent Office**

**Office européen des brevets**

(11) Numéro de publication: **0 236 841**
**B1**

(12) # FASCICULE DE BREVET EUROPEEN

(45) Date de publication du fascicule du brevet:
22.08.90

(51) Int. Cl.⁵: **G01B 7/04**

(21) Numéro de dépôt: 87102610.0

(22) Date de dépôt: 24.02.87

(54) Procédé de mesure de l'allongement relatif d'un élément de grande longueur et de faible dimension transversale en métal magnétisable, et dispositif de mise en oeuvre de ce procédé.

(30) Priorité: 27.02.86 FR 8602738

(43) Date de publication de la demande:
16.09.87 Bulletin 87/38

(45) Mention de la délivrance du brevet:
22.08.90 Bulletin 90/34

(84) Etats contractants désignés:
DE FR GB IT

(56) Documents cités:
FR-A- 2 466 746
GB-A- 952 074
GB-A- 2 131 553
US-A- 2 332 797
US-A- 2 580 934
US-A- 4 041 610

(73) Titulaire: LES CABLES DE LYON Société anonyme dite:,
170 quai de Clichy, F-92111 Clichy Cedex(FR)

(72) Inventeur: Libert, Jean-François, 13, rue de Verdun
Condette, F-62360 Pont de Briques St. Etienne(FR)
Inventeur: Milhamont, Eric, 14, rue Saint Nicolas,
F-62100 Calais(FR)
Inventeur: Canivet, Jean-Luc, 156 L§Etoile, F-62215 Oye
Plage(FR)
Inventeur: Vives, Jean-Patrick, 34 rue Masséna,
F-62100 Calais(FR)

(74) Mandataire: Weinmiller, Jürgen et al,
Lennéstrasse 9 Postfach 24, D-8133 Feldafing(DE)

ACTORUM AG

## Description

La présente invention concerne un procédé de mesure de la variation de l'allongement d'un élément de grande longueur et de faible dimension transversale en métal magnétisable, recouvert ou non de matériau non magnétique, défilant entre une zone où l'allongement est moins élevé et une zone où l'allongement est plus élevé, ou réciproquement, par marquage magnétique périodique sur l'élément allongé. Elle s'étend en outre à un dispositif de mise en œuvre de ce procédé.

Ce procédé et ce dispositif s'appliquent notamment à la mesure de la variation de l'allongement d'un jonc de câble à fibres optiques comportant des rainures de logement des fibres optiques, lorsque l'on soumet le jonc à une tension entraînant son allongement élastique avant la mise en place des fibres optiques dans les rainures du jonc, puis relâche la tension pour obtenir une surlongueur de fibres dans les rainures, et éviter que ces fibres soient soumises à un allongement aussi important que ceux auxquels peut être soumis le câble une fois terminé lors de ses manipulations et de sa pose. Des joncs rainurés de la sorte sont décrits dans les documents FR-A 2 312 788 et 2 544 874, ce dernier au nom de la Demanderesse. Il s'applique également à la mesure de l'allongement de fils ou câbles en cours de fabrication.

En effet, dans la fabrication des câbles à fibres optiques, notamment des câbles sous-marins, on est obligé de tenir compte des efforts de traction considérables qui seront exercés sur le câble lors de la pose et également lors d'un relevage éventuel pour réparation, car les fibres optiques ne peuvent supporter qu'un allongement très faible (de l'ordre de 1 à 1,5%) sans se rompre, alors que les éléments plastiques et métalliques constituant l'âme et l'armure de ce câble sont susceptibles de s'allonger beaucoup plus en traction. On est donc conduit à ménager un excès de longueur de fibres optiques à l'intérieur du câble, de sorte que celles-ci se trouvent mises en traction le plus tard possible lors d'un allongement du câble, suivant le procédé décrit dans le document DE-A 2 519 050.

Dans la version actuellement retenue pour un tel type de câble, les fibres optiques sont disposées individuellement dans des alvéoles creusées, souvent en hélice, à la périphérie d'un jonc en matériau plastique, muni axialement d'un renfort métallique câblé ou "porteur central" en acier à haute limite élastique. Les alvéoles sont suffisamment larges et profondes pour que les fibres puissent y coulisser librement et même adopter un parcours sinueux de longueur nettement supérieure à la longueur du jonc.

Cette "surlongueur" est obtenue très simplement en déposant les fibres dans leurs alvéoles dans une zone de la ligne de fabrication où le jonc rainuré est fortement allongé sous l'effet d'un effort de traction de plusieurs dizaines de kilogrammes. Cet effort est ensuite relâché et le jonc rainuré reprend sa longueur initiale, de sorte que la longueur de fibre déposée dans les alvéoles est supérieure à celle du câble. Fréquemment l'allongement qui peut être appliqué au câble sans que les fibres elles-mêmes soient soumises à un effort de traction atteint 1,4%.

On conçoit qu'il est de la plus grande importance de doser cette "surlongueur" lors de la fabrication du câble, car si une insuffisance peut conduire à la rupture des fibres en traction, un trop grand excès de longueur est préjudiciable à la fois pour le prix et l'atténuation du câble, en particulier à cause des microcourbures des fibres qui risquent de se produire. De plus, la mesure d'allongement du jonc doit être effectuée autant que possible pendant le défilement du câble en fabrication, pour pouvoir remédier à tout défaut éventuel avant qu'il ne soit trop tard. Comme la longueur des fibres elles-mêmes est très difficilement accessible, on a choisi de mesurer la variation d'allongement du porteur central, donc du jonc rainuré, entre les zones où il n'est soumis qu'à une tension faible, et les zones où il est mis sous forte tension pour la mise en place des fibres.

La présente invention fait appel au marquage de l'élément de grande longueur comprenant un matériau magnétisable par magnétisation de ce matériau. On a déjà proposé dans le document FR-A 2 466 746 d'utiliser le marquage magnétique pour la mesure de la longueur d'objets en défilement, comme des tubes ou des câbles métalliques, mais ce procédé ne permettait pas de mettre en évidence de faibles variations de longueur, lorsqu'il y a lieu de mesurer les variations d'allongement entre une zone de faible tension du jonc et une zone où il est mis sous forte tension, puis une zone où la tension est relâchée, et lorsque les allongements ne sont pas uniformes lors du défilement de l'élément de grande longueur.

Le document GB-A 2 131 553 a proposé de détecter un allongement intempestif d'une bande convoyeuse en comparant la distance entre deux marques magnétiques appliquées à la bande avec une distance fixe entre deux marques magnétiques portées par la bande. Cependant un tel procédé n'assure qu'une indication approximative et n'est applicable qu'à une bande ou autre élément analogue circulant en circuit fermé.

Le document GB-A 952 074 décrit un procédé et un dispositif de mesure de l'allongement relatif d'un objet magnétisable allongé au passage d'un laminoir, dans lequel on imprime sur l'objet une marque magnétique, d'une part en amont, d'autre part en aval du laminoir, et on enregistre le passage de l'objet en face d'un détecteur, également en amont et en aval du laminoir, chaque groupe de marqueur et de détecteur magnétique étant séparé par une distance fixe, et on mesure la différence des temps séparant les magnétisations des détections. Un tel procédé n'est pas d'une grande précision et ne fournit pas de mesures exactes lors de régimes transitoires d'accélération ou de ralentissement du déplacement de l'objet.

La présente invention a pour but de procurer un procédé et un appareil permettant la mesure de la variation de l'allongement d'un élément de grande longueur avec une grande précision et une grande fréquence, lorsque les variations d'allongement sont relativement faibles et lorsqu'elles ne sont pas uniformes, et lorsque l'élément parcourt en circuit ouvert une chaîne de fabrication.

Le procédé selon l'invention est caractérisé en ce que le marquage magnétique périodique de l'élément allongé est effectué simultanément en deux points espacés d'une longueur prédéterminée dans la première zone, puis en ce que l'on détecte les instants de passage des marques magnétiques en au moins un point situé dans l'autre zone.

Il répond en outre de préférence à au moins l'une des caractéristiques suivantes:

- On commande le marquage magnétique de l'élément allongé par le passage de la première marque dans le sens de défilement du couple de marques imprimé antérieurement sur cet élément devant un détecteur disposé entre les deux points de marquage, en un point tel que la distance du détecteur au premier point de marquage ne soit pas un sous-multiple de la distance entre les deux points de marquage, et on dispose le détecteur de façon que, quelles que soient les conditions aux limites d'allongement relatif, on ne trouve jamais deux marques en même temps entre les lecteurs.
- On détecte les instants de passage des marques magnétiques dans l'autre zone devant un premier détecteur et un groupe d'autres détecteurs, dont l'un est espacé du premier détecteur de la même distance que les deux points de marquage de la première zone.
- On détecte les instants de passage des marques magnétiques en plusieurs points successifs de l'autre zone, et l'on détermine, indépendamment de la vitesse de défilement dans cette zone et des variations de cette vitesse, la distance entre les deux marques magnétiques de chaque couple de marques en observant les différents instants de passage des marques devant des détecteurs et en résolvant un système de relations non linéaires liant les distances entre les détecteurs et les écarts entre les instants de passage des marques devant ces détecteurs.
- On transmet les signaux de détection du passage d'une marque, après filtrage, d'une part dans un circuit dans lequel ils sont amplifiés jusqu'à saturation puis redressés, et transformés en impulsions logiques, d'autre part dans un autre circuit dans lequel ils sont soumis à une amplification moindre et comparés à une tension de seuil, les signaux issus du second circuit servant à valider ceux issus du premier, de façon à éliminer les signaux parasites.

Le dispositif selon l'invention est caractérisé en ce qu'il comprend deux organes de marquage magnétique espacés d'une distance déterminée dans une première zone où l'allongement est moins élevé ou plus élevé, un organe de commande simultanée des organes de marquage magnétique, et des détecteurs magnétiques permettant d'observer les instants de passage des marques imprimées dans l'autre zone où l'allongement est plus élevé ou moins élevé.

Il répond en outre de préférence à au moins l'une des caractéristiques suivantes :

- L'organe de commande des deux organes de marquage magnétique est un détecteur disposé entre les deux organes de marquage, en un point tel qu'il n'y ait pas coïncidence entre les marques engendrées par l'un des marqueurs et celles engendrées par l'autre marqueur, et on dispose le détecteur de façon que, quelles que soient les conditions aux limites de la variation d'allonement, on ne trouve jamais deux marques en même temps entre les lecteurs.
- Il comporte des détecteurs des instants de passage des marques magnétiques dans l'autre zone, dont l'un est en position fixe et dont les autres sont solidaires et de position réglable à l'aide d'une vis micrométrique.
- Il comprend un organe de filtrage des signaux de détection de passage d'une marque, un premier circuit d'amplification jusqu'à saturation et de redressement, puis de génération d'un signal logique correspondant au passage par zéro du signal analogique, un second circuit d'amplification plus faible des signaux et de comparaison de ceux-ci à un signal de seuil, et des moyens de validation ou d'invalidation des signaux du premier circuit grâce à ceux du second circuit.

Les organes de marquage seront constitués en général par des bobines inductrices alimentées par des signaux impulsionnels et placées à proximité immédiate de l'élément de grande longueur en défilement. Les détecteurs seront constitués par des bobines de réception également placées à proximité immédiate de l'élément en défilement.

Dans le cas le plus simple où l'on opère à vitesse de défilement constant, soit d ($M_A$, $M_B$) la distance sur l'élément entre les marques engendrées par les organes de marquage, supposés disposés dans une zone de faible tension, et d ($m_A$, $m_B$) la distance entre les marques reçues par un détecteur dans la zone de tension plus élevée, l'allongement relatif est donné par la formule :

$$A_r = \frac{d\ (m_A,\ m_B)}{d\ (M_A,\ M_B)} - 1$$

On obtiendrait une formule analogue si les organes de marquage étaient dans une zone de forte tension, à une distance d ($M_A$, $M_B$) et les détecteurs dans une zone de tension plus faible où les marques seraient distantes de d ($m_A$, $m_B$)

$$A_r = \frac{d\ (M_A,\ M_B)}{d\ (m_A,\ m_B)} - 1$$

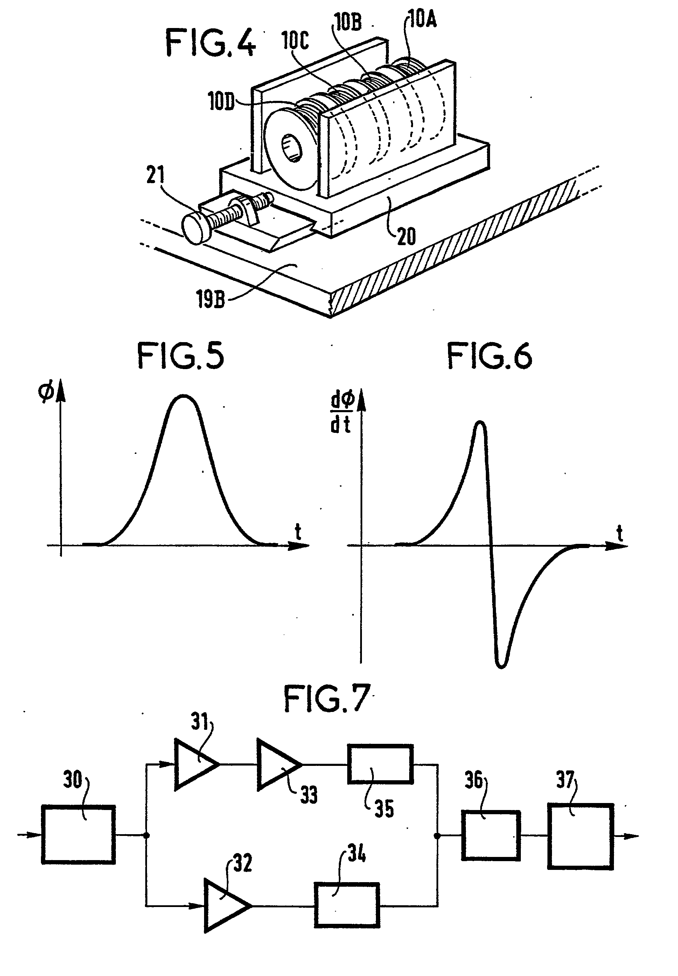

Si le signal magnétique de marquage a la forme d'une impulsion en forme de courbe en cloche (figure 5), le signal détecté dans une bobine de réception sera proportionnel à la variation de flux

$$\frac{d\ \phi}{d\ t}$$

induite dans cette bobine par le passage de la marque magnétique et aura la forme de la figure 6. Ce sont les passages par zéro de ce signal détecté qui déclencheront les impulsions envoyées aux organes de calcul.

Le dispositif selon l'invention est conçu par ailleurs pour éliminer un certain nombre de causes d'erreur qui auraient pu affecter les dispositifs antérieurs plus simples.

D'une part, les impulsions détectées et envoyées aux organes de calcul pourraient être confondues avec des signaux parasites (étincelles électriques, crachements ou décharges intempestives). Pour éliminer ceux-ci, les impulsions détectées, qui sont fortement amplifiées et écrêtées puis dérivées, sont comparées aux signaux transportés par un circuit parallèle travaillant à un niveau beacoup plus faible (figure 7).

D'autre part, les signaux détectés issus de plusieurs capteurs sont utilisés par les organes de calcul pour tenir compte des variations de vitesse de défilement, ces variations introduisant des termes non linéaire dans les équations de la forme
$$d (L_1, L_2) = e (T_2 - T_1) + f (T_2 - T_1)^2 + g (T_2 - T_1)^3 ....$$
qui lient le temps de passage devant deux lecteurs à la distance entre ces deux lecteurs.

On conçoit que la combinaison de informations de plusieurs capteurs ( par exemple cinq) puisse permettre d'établir suffisamment d'équations pour calculer tous les paramètres nécessaires à la détermination des variations d'allongement locales aux différents points de passage du câble.

Les bobines de marquage et les bobines réceptrices pourront être optimisées de manière à obtenir le meilleur rapport

$$\underline{\text{Signal}}$$
$$\underline{\text{bruit}} .$$

En particulier, elles pourront comporter des noyaux magnétiques, et leur entrefer sera dimensionné pour qu'elles ne soient pas sensibles aux champs perturbateurs. On pourra également utiliser des couples de bobines magnétiques situées de part et d'autre du câble à marquer ou à analyser de manière à obtenir le maximum de rendement.

Il est décrit ci-après, à titre d'exemple et en référence aux figures de dessin annexé, un dispositif de mesure de la variation de l'allongement d'un jonc de câble à fibres optiques entre une zone d'amenée sous faible tension, une zone d'allongement sous forte tension et une zone de réception à nouveau sous faible tension.

La figure 1 représente schématiquement l'ensemble du dispositif.

La figure 2 représente un ensemble de marquage magnétique de l'âme du jonc.

La figure 3 représente un ensemble de détection du passage des marques magnétiques.

La figure 4 représente en détail des bobines de détection et leur organe de réglage micrométrique.

La figure 5 représente la forme d'un signal magnétique de marquage.

La figure 6 représente la forme d'un signal de détection.

La figure 7 représente schématiquement un circuit de comparaison et de calcul permettant de déterminer la variation d'allongement du câble à partir des signaux de détection.

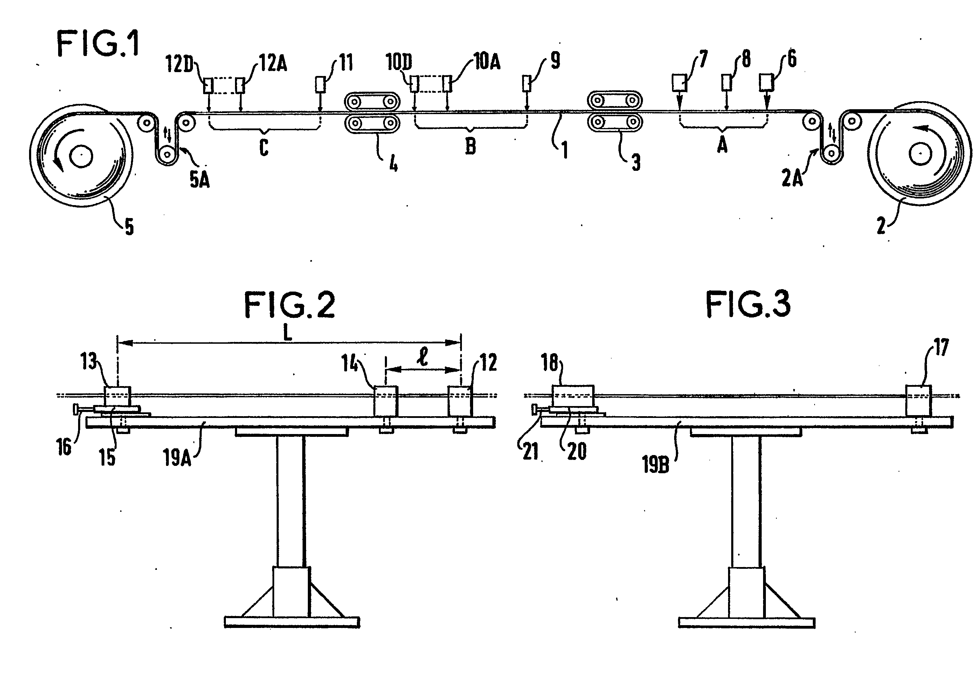

Dans la figure 1, le jonc 1 est approvisionné à partir du tambour 2, dont il est extrait par un train de chenilles 3. La zone A entre le tambour 2 et le train de chenilles 3 est sous une faible tension juste nécessaire à l'avance du jonc. Un pantin régulateur de tension 2A est situé entre le tambour d'émission et l'ensemble A.

Dans la zone B entre les trains de chenilles 3 et 4, le jonc est sous une forte tension, destinée à lui imprimer un certain allongement avant la pose des fibres optiques dans ses rainures. A cet effet, le train de chenilles 4 tourne à une vitesse plus élevée que le train 3. On effectue dans cette zone la dépose des fibres optiques dans les rainures du jonc à l'aide d'organes connus, non représentés.

Dans la zone C entre le train de chenilles 4 et le tambour de réception 5, le jonc est à nouveau sous faible tension, de façon à permettre aux fibres optiques de prendre un certain mou dans leurs rainures. De même un second pantin régulateur de tension 5A est placé entre la zone C et la bobine de recette.

Le dispositif de marquage est disposé dans la zone A. Il comporte deux bobines inductrices de marquage 6 et 7, espacées d'une distance prédéterminée L connue avec précision (voir fig.2). Entre ces deux bobines est disposée une bobine de détection 8, à des distances déterminées 1 et (L-1) de chacune des bobines 6 et 7. La distance 1 n'est pas un sous-multiple de la distance L, pour éviter que deux marques consécutives ne soient engendrées au même endroit du jonc.

Le premier dispositif de détection est disposé dans la zone B. Il comprend une bobine de détection isolée 9 et un groupe de bobines de détection 10A, 10B, 10C, 10D. Le nombre de bobines dans ce groupe peut cependant être inférieur ou supérieur à 4.

La distance entre les bobines 9 et 10B est choisie égale à la distance L entre les bobines de marquage 6 et 7.

La zone C est munie d'un dispositif de détection analogue à celui de la zone B, comprenant une bobine de détection isolée 11 et un groupe de bobines de détection 12A, 12B, 12C, 12D, la distance entre les bobines 11 et 12B étant égale à celle entre les bobines 6 et 7.

Pour éviter que des dilatations thermiques ne viennent perturber les mesures, les zones A, B et C seront disposées dans un même atelier, afin que leurs températures soient sensiblement identiques.

Dans la zone A, les bobines de marquage 6 et 7 et de détection 8 sont disposées dans des supports 12, 13 et 14 portés par une même barrette longitudinale (fig.2). Le support 13 est monté sur un plateau coulissant 15 dont la position est régalble avec précision à l'aide d'une vis micrométrique 16.

Dans la zone B, les bobines 9, 10A,---10D sont disposées dans des supports respectifs 17 et 18 portés par une même barrette longitudinale (fig.3). Le support 18 des bobines 10A,---, 10D est monté sur un plateau coulissant 20 dont la position est réglable avec précision à l'aide d'une vis micrométrique 21. Pour éviter toute imprécision résultant de dilatations différentielles, les barrettes 19A et 19B seront en le même matériau. La figure 4 représente plus en détail les bobines 10A,----,10D, leur platine-support 20 et la vis micrométrique de réglage 21.

La distance entre les bobines 10A et 10D doit être supérieure à l'écart entre les variations d'allongement maximales (lecture sous la tension maximale possible en zone B de l'écart entre des marques faites sous la tension minimale possible en zone A) et minimales (lecture sous la tension minimale possible en zone B de l'écart entre des marques faites sous la tension maximale possible en zone A). Par ailleurs, lorsqu'une marque $m_A$ imprimée par la bobine 6 est détectée par la bobine 9, la marque $m_B$ imprimée simultanément par la bobine 7 doit se situer entre les détecteurs 10A et 10D. Un moyen de repérer deux marques $m_A$ et $m_B$ de même couple est de positionner le détecteur 8 de façon que quelles que soient les conditions aux limites (mini et maxi) de variation d'allongement, on ne trouve jamais deux marques en même temps entre les détecteurs 10A et 10D.

Pour la mesure dans la zone C de recette du jonc, on prendra les mêmes conditions.

On réglera en premier lieu la distance entre les bobines 9 et 10B à la même valeur que celle entre les bobines 6 et 7.

A cet effet, l'ensemble des bobines 10A, 10B, 10C, 10D, d'écartements mutuels déterminés, étant solidaire du support 18, après avoir appliqué la même tension en zone B qu'en zone A, on agit sur la vis micrométrique pour que le signal de détection par la bobine 10B d'une marque $m_B$ d'un couple de marques, soit synchrone du signal de détection par la bobine 9 de la marque $m_A$ du même couple, par exemple à l'aide d'un oscilloscope synchronisé sur le signal de détection de la bobine 9.

On mesure ensuite les distances séparant les bobines 10A et 10B, 10A et 10C, 10A et 10D.

Par exemple pour la distance entre les bobines 10A et 10B, la position de la vis micrométrique ayant été repérée initialement, on fait varier la position du plateau 20 de façon à rendre synchrones les détections de la marque $m_A$ par la bobine 9 et de la marque $m_B$ par la bobine 10A, les tensions restant les mêmes dans les zones A et B.

La distance des deux bobines est alors égale à la différence des deux positions de la vis micrométrique 21.

Aux bobines 9, 10A, 10B, 10C, 10D sont par ailleurs associés des compteurs, non représentés, dont le rôle sera indiqué ci-après.

Le fonctionnement du dispositif de mesure de variation d'allongement est le suivant.

A un instant déterminé, une impulsion est envoyée aux bobines de marquage 6 et 7, qui engendrent simultanément des marques magnétiques sur le jonc 1 en cours de défilement. Lorsque la marque engendrée par le marqueur 6 parvient devant la bobine de détection 8, cette dernière engendre une nouvelle impulsion de marquage d'un nouveau couple de marques magnétiques par les bobines 6 et 7.

Pour une longueur L donnée, plus la distance 1 sera faible, plus le nombre de couples de marques par unité de longueur du jonc sera important. Le temps de marquage doit être suffisamment faible pour éviter toute incertitude résultant d'un étalement de la marque magnétique du fait d'un temps trop élevé par rapport à la vitesse de défilement du câble (phénomène de "flou").

Dans la zone B, le passage de la marque $m_B$ imprimée par la bobine 7 devant la bobine 10A déclenche quatre compteurs correspondant aux bobines 10B, 10C, 10D et 9. Le passage de la marque $m_B$ devant la bobine 10B interrompt le comptage du compteur correspondant qui a enregistré un temps $T_1$. Celui de cette même marque devant la bobine 10C interrompt le comptage du compteur correspondant qui a enregistré un temps $T_2$. Le passage de la marque $m_A$ devant la bobine 9 interrompt le compteur correspondant, qui a enregistré un temps $T_4$. Enfin, le passage de la marque $m_B$ devant la bobine 10D interrompt le compteur correspondant, qui a enregistré un temps $T_3$. La distance d ($m_A$, $m_B$) entre les marques $m_A$ et $m_B$ peut être déterminée à partir d'équations telle que :

d (bobine 10A, bobine 10B) = f ($T_1$)
d (bobine 10A, bobine 10C) = f ($T_2$)
d (bobine 10A, bobine 10D) = f ($T_3$)
d ($m_A$, $m_B$) = d (bobine 9, bobine 10A) + $x_1$ avec $x_1$ = f ($T_4$).

Ceci permet de tenir compte des variations de vitesse de défilement du jonc en exprimant les distances en fonction des temps par des polynômes tels que

d (bobine 10A, bobine 10B) = $aT_1 + bT_1^2 + cT_1^3$
d (bobine 10A, bobine 10C) = $aT_2 + bT_2^2 + cT_2^3$
d (bobine 10A, bobine 10D) = $aT_3 + bT_3^2 + CT_3^3$
et $x_1 = aT_4 + bT_4^2 + cT_4^3$

On dispose alors d'un système de 3 équations à 3 inconnues a, b et c. On peut alors déterminer ces inconnues et en déduire $x_1$. Dès lors d ($m_A$, $m_B$) = d (bobine 9, bobine 10A) + $x_1$.

Bien entendu, en utilisant un détecteur supplémentaire, on pourrait introduire dans les équations un terme en $T^4$, mais cela complique les calculs et n'améliore pas forcément la précision sur les résultats finaux.

La figure 5 représente la forme (amplitude en fonction du temps) du signal magnétique de marquage de l'une des bobines 6 ou 7 (impulsion en forme de courbe en cloche).

La figure 6 représente la forme du signal donné par une bobine de détection (amplitude en fonction de temps). Celui-ci est proportionnel à la variation de flux

$$\frac{d\phi}{dt}$$

induite dans cette bobine par le passage de la marque magnétique. Ce sont les passages par zéro de ce signal qui déclencheront les impulsions envoyées aux organes de calcul.

Pour éviter que les signaux résultant de la détection des marques magnétiques ne soient perturbés par des tensions parasites résultant par exemple d'étincelles électriques, de crachements ou de décharges intempestives, les signaux provenant des bobines de détection sont envoyés à sur des cartes électroniques comportant le circuit de traitement représenté en figure 7.

Après filtrage dans le filtre passe-bas 30, les signaux sont traités dans deux circuits parallèles. Dans le premier circuit, ils sont amplifiés jusqu'à saturation dans les amplificateurs 31 et 33, puis redressés en 35. De cette façon, le passage par zéro de chaque signal est représenté par une très brève impulsion de tension nulle en sortie de circuit.

L'amplification étant très importante, toute tension parasite apparaissant dans le circuit de transmission des signaux pourrait aussi engendrer des impulsions très brèves de tension nulle.

Pour éliminer ces tensions parasites, le second circuit dit circuit de validation, ne valide une impulsion nulle que lors du passage d'une marque magnétique. A cet effet, le signal est amplifié dans l'amplificateur 32, dans une moindre mesure, sans atteindre la saturation. Il est alors aisé, par comparaison de seuils de tension, de distinguer le signal dû au passage d'une marque de celui dû à une tension parasite dans l'organe de validation 34. Celui-ci ne laisse parvenir à l'organe de traitement logique 36 que les signaux de tension qu'il a validés.

Ce dernier enregistre un signal logique correspondant au passage par zéro de chaque signal analogique validé selon la figure 6.

Ces signaux sont envoyés à un organe 37 de traitement anti-rebond, puis traités par un organe de calcul pour en extraire les données de variation de l'allongement qui sont affichées et simultanément enregistrées sur bande.

Un dispositif de détection analogue, disposé dans la zone C de recette du jonc détendu muni de ses fibres optiques, permet de déterminer la variation de l'allongement, positive ou négative, intervenue dans cette zone.

## Revendications

1. Procédé de mesure de la variation de l'allongement d'un élément de grande longueur et de faible dimension transversale en matériau magnétisable (1), recouvert ou non de matériau non magnétique, défilant entre une zone (A) où l'allongement est moins élevé et une zone (B) où l'allongement est plus élevé, ou réciproquement, par marquage magnétique périodique sur l'élément allongé, caractérisé en ce que ce marquage est effectué simultanément en deux points (6, 7) espacés d'une longueur prédéterminée dans la première zone (A), puis en ce que l'on détecte les instants de passage des marques magnétiques en au moins un point (9, 10A, ...10D) situé dans l'autre zone (B).

2. Procédé selon la revendication 1, caractérisé en ce que l'on commande le marquage magnétique de l'élément allongé (1) par le passage de la première marque dans le sens de défilement du couple de marques imprimé antérieurement sur cet élément devant un détecteur (8) disposé entre les deux points de marquage, en un point tel que la distance du détecteur (8) au premier point de marquage ne soit pas un sous-multiple de la distance entre les deux points de marquage, et on dispose le détecteur (8) de façon que quelles que soient les conditions aux limites d'allongement relatif, on ne trouve jamais deux marques en même temps entre les lecteurs (10A, ...10D).

3. Procédé selon les revendications 1 ou 2, caractérisé en ce que l'on détecte les instants de passage des marques magnétiques dans l'autre zone (B) devant un premier détecteur (9) et un groupe d'autres détecteurs (10A, ...10D) dont l'un (10B) est espacé du premier détecteur de la même distance que les deux points de marquage (6, 7) de la première zone.

4. Procédé selon l'une des revendications 1 à 3, caractérisé en ce que l'on détecte les instants de passage des marques magnétiques en plusieurs points successifs de l'autre zone (B), et en ce que l'on détermine, indépendamment de la vitesse de défilement dans cette zone et des variations de cette vitesse, la distance entre les deux marques magnétiques de chaque couple de marques en observant les différents instants de passage des marques devant des détecteurs (9, 10A, ...10D) et en résolvant un système de relations non linéaires entre les distances entre détecteurs et les écarts entre les instants de passage des marques devant ces détecteurs.

5. Procédé selon l'une des revendications 1 à 4, caractérisé en ce que l'on transmet les signaux de détection du passage d'une marque, après filtrage (30, fig. 7), d'une part dans un circuit dans lequel ils sont amplifiés (31, 33) jusqu'à saturation puis redressés (35), et transformés en impulsions logiques, d'autre part dans un autre circuit dans lequel ils sont soumis à une amplification moindre (32) et comparés à une tension de seuil (34), les signaux issus du second circuit servant à valider ceux issus du premier, de façon à éliminer les signaux parasites.

6. Dispositif de mesure de la variation de l'allongement d'un élément de grande longueur (1), à l'aide d'organes de marquage magnétique et de détecteurs magnétiques, selon le procédé de la revendication 1, caractérisé en ce qu'il comprend deux organes de marquage magnétique (6, 7) espacés d'une distance déterminée dans une première zone (A) où l'allongement est moins élevé ou plus élevé, un organe (8) de commande simultanée des organes de marquage magnétique, et des détecteurs magnétiques (9, 10A, ...10D) permettant d'observer les instants de passage des marques imprimées dans l'autre zone (B) où l'allongement est plus élevé ou moins élevé.

7. Dispositif selon la revendication 6, caractérisé en ce que l'organe de commande des deux organes de marquage magnétique (6, 7) est un détecteur (8) disposé entre les deux organes de marquage, en un point tel qu'il n'y ait pas coïncidence entre les marques engendrées par l'un des marqueurs et celles engendrées par l'autre marqueur, et en ce qu'on dispose le détecteur de façon que, quelles que soient les conditions aux limites de la variation d'allongement, on ne trouve jamais deux marques en même temps entre les lecteurs.

8. Dispositif selon les revendications 6 ou 7, caractérisé en ce qu'il comporte des détecteurs des instants de passage des marques magnétiques dans l'autre zone, dont l'un est en position fixe et dont les autres (10A, 10B, 10C, 10D) sont solidaires et de position réglable à l'aide d'une vis micrométrique (21).

9. Dispositif selon l'une des revendications 6 à 8, caractérisé en ce qu'il comprend un organe (30) de filtrage des signaux de détection de passage d'une marque, un premier circuit (31, 33, 35) d'amplification jusqu'à saturation et de redressement, puis de génération d'un signal logique correspondant au passage par zéro du signal analogique, un second circuit (32, 34) d'amplification plus faible des signaux et de comparaison de ceux-ci à un signal de seuil, et des moyens de validation ou d'invalidation des signaux du premier circuit grâce à ceux du second circuit.

## Claims

1. A method of measuring the variation in the elongation of a very long element of small transverse dimensions and made of a magnetizable metal (1), optionally covered by a non-magnetic material, said element running from a zone (A) of lower elongation to a zone (B) of higher elongation, or vice-versa, the method comprising periodical magnetic marking on the elongated element, characterized in that said periodical marking is carried out simultaneously at two points (6, 7) spaced apart by a predetermined distance in the first zone (A), and than then the instants are detected at which the magnetic marks pass at least one point (9, 10A, ...10D) situated in the other zone (B).

2. A method according to claim 1, characterized in that the magnetic marking of the elongated element (1) is controlled by the passing of the first mark in the direction of passage of the pair of marks previously registered on this element in front of a detector (8) disposed between the two marking points, in a point such that the distance between the detector (8) and the first marking point is not a submultiple of the distance between the two marking points, and the detector (8) is disposed in such a way that regardless of the conditions as to the relative elongation limits, there are never two marks simultaneously between the readers (10A, ...10D).

3. A method according to claim 1 or 2, characterized in that the instants are detected in which the magnetic marks pass in the other zone (B) in front of a first detector (9) and a group of other detectors (10A, ...10D), one of these (10B) being spaced apart from the first detector by the same distance as the two marking points (6, 7) of the first zone.

4. A method according to one of claims 1 to 3, characterized in that the instants are detected in which the magnetic marks pass in several successive points of the other zone (B) and, independently of the running speed in this zone and variations of this speed, the distance between the two magnetic marks of each pair of marks is determined by observing the different instants of the passing of the marks in front of the detectors (9, 10A, ...10D) and by resolving a system of non-linear relations connecting the distances between the detectors and the time intervals between the instants when the marks pass in front of said detectors.

5. A method according to one of claims 1 to 4, characterized in that the signals corresponding to the passage of a mark are transmitted, after filtering (30, Figure 7), on the one hand to a circuit in which they are amplified (31, 33) to saturation and then rectified (35) and transformed into logic pulses, and on the other hand to another circuit in which they are submitted to a lower amplification (32) and compared to a threshold voltage (34), the signals issuing from the second circuit being used to validate those from the first circuit, so as to eliminate interference signals.

6. A device for measuring the variation in the elongation of a very long element (1) by means of members for magnetic marking and magnetic detectors, according to the method of claim 1, characterized in that it comprises two marking members (6, 7) spaced apart at a predetermined distance in a first zone (A) where the elongation is less high or higher, a member (B) for simultaneous control of the members for magnetic marking, and magnetic detectors (9, 10A, ...10D) allowing to observe the instants of passage of the recorded marks in the other zone (B) where the elongation is higher or less high.

7. A device according to claim 6, characterized in that the control member of the two magnetic marking members (6, 7) is a detector (8) disposed between the two marking members, in such a position that there is no coincidence between the marks created by one of the markers and those created by the other marker, and that the detector is disposed in such a way that regardless of the conditions at the limits of the elongation variation, there are never two marks at the same time between the readers.

8. A device according to claim 6 or 7, characterized in that it comprises detectors for detecting the instants at which the magnetic marks pass in the other zone, one of said detectors being in a fixed position and the other detectors (10A, 10B, 10C, 10D) being fixed relative to one another and of a common position which may be adjusted by means of a micrometer screw (21).

9. A device according to one of claims 6 to 8, characterized in that it comprises a member (30) for filtering detection signals corresponding to the passage of a mark, a first circuit (31, 33, 35) in which said filtered signals are amplified to saturation and rectified, then transformed into a logic signal corresponding to a zero pass of the analog signal, a second circuit (32, 34) in which said filtered signals are amplified to a lesser degree and then compared with a threshold signal, and means for validating or invalidating the signals of the first circuit as a function of those of the second circuit.

## Patentansprüche

1. Verfahren zur Messung der Dehnung eines Elements großer Länge und kleiner Querabmessung aus magnetisierbarem Material (1), das mit nicht-magnetischem Material bedeckt sein kann und von einer Zone (A), in der die Dehnung geringer ist, in eine Zone (B), in der die Dehnung größer ist, oder umgekehrt, verläuft, wobei das längliche Element periodisch mit magnetischen Marken versehen wird, dadurch gekennzeichnet, daß diese Marken gleichzeitig an zwei Punkten (6, 7) angebracht werden, die in der ersten Zone (A) liegen und einen vorbestimmten Abstand voneinander haben, und daß man die Zeitpunkte erfaßt, an denen die magnetischen Marken an mindestens einem Punkt (9, 10A, ...10D) in der anderen Zone (B) eintreffen.

2. Verfahren nach Anspruch 1, dadurch gekennzeichnet, daß das magnetische Markieren des länglichen Elements (1) durch die Erfassung der ersten Marken gesehen in Bewegungsrichtung des Paars von Marken, die vorher auf dieses Element aufgebracht wurden, mit einem Detektor (8) gesteuert wird, der zwischen den beiden Markierpunkten an einem solchen Punkt angeordnet ist, daß der Abstand des Detektors (8) vom ersten Markierpunkt kein Untervielfaches des Abstands zwischen den beiden Markierpunkten ist, und daß der Detektor (8) so angeordnet wird, daß man nie zwei Marken zur gleichen Zeit zwischen den Lesern (10A, ...10D) antrifft, und zwar unabhängig von den Bedingungen an den Grenzen der relativen Längenänderung.

3. Verfahren nach den Ansprüchen 1 oder 2, dadurch gekennzeichnet, daß die Zeitpunkte erfaßt werden, an denen die magnetischen Marken in der anderen Zone (B) von einem ersten Detektor (9) und von einer Gruppe anderer Detektoren (10A, ...10D) erkannt werden, von denen einer (10B) den gleichen Abstand vom ersten Detektor aufweist wie die beiden Markierpunkte (6, 7) der ersten Zone.

4. Verfahren nach einem der Ansprüche 1 bis 3, dadurch gekennzeichnet, daß die Zeitpunkte erfaßt werden, an denen die magnetischen Marken an verschiedenen aufeinanderfolgenden Punkten der anderen Zone (B) erkannt werden, und daß man unabhängig von der Vorschubgeschwindigkeit in dieser Zone und den Änderungen dieser Geschwindigkeit den Abstand zwischen den beiden magnetischen Marken jedes Markenpaars bestimmt, indem man die verschiedenen Eintreffmomente der Marken an den Detektoren (9, 10A, ...10D) erfaßt und indem man ein System von nicht-linearen Beziehungen zwischen den Detektorabständen und den Zeitabständen löst, die zwischen den Eintreffmomenten der Marken durch diese Detektoren liegen.

5. Verfahren nach einem der Ansprüche 1 bis 4, dadurch gekennzeichnet, daß man die Signale, die durch eine Marke in einem Detektor erzeugt werden, nach Filterung (30, Figur 7) einerseits in einen Kreis, in dem sie bis zur Sättigung verstärkt (31, 33) und dann gleichgerichtet (35) werden und in logische Impulse umgewandelt werden, und andererseits in einen Kreis überträgt, in dem sie einer geringeren Verstärkung (32) unterworfen und mit einer Schwellenspannung (34) verglichen werden, wobei die aus dem zweiten Kreis kommenden Signale zur Bestätigung der Ausgangssignale des ersten Kreises dienen, wodurch parasitäre Signale vermieden werden.

6. Vorrichtung zur Messung der Längenveränderung in der Dehnung eines Elements großer Länge (1) mit Hilfe von magnetischen Markierorganen und magnetischen Detektoren, gemäß dem Verfahren nach Anspruch 1, dadurch gekennzeichnet, daß sie zwei magnetische Markierorgane (6, 7), die in einer ersten Zone (A), in der die Dehnung geringer oder größer ist, liegen und einen vorbestimmten Abstand haben, ein Organ (B) zur gleichzeitigen Steuerung der magnetischen Markierelemente und magnetische Detektoren (9, 10A, ...10D) aufweist, die in der anderen Zone (B) liegen, in der die Dehnung größer oder geringer ist, und es ermöglichen, die Zeitpunkte zu erfassen, an denen die Marken eintreffen.

7. Vorrichtung nach Anspruch 6, dadurch gekennzeichnet, daß das Steuerorgan der beiden magnetischen Markierorgane (6, 7) ein Detektor (8) ist, der zwischen den beiden Markierorganen an einem solchen Punkt angeordnet ist, daß es keine Koinzidenz zwischen den von einem Markierer erzeugten Marken und denen von dem anderen Markierer erzeugten Marken gibt, und daß der Detektor so angeordnet ist, daß unabhängig von den Bedingungen an den Grenzen der Längenänderung niemals zwei Marken sich zu gleicher Zeit zwischen den Lesern befinden.

8. Vorrichtung nach Anspruch 6 oder 7, dadurch gekennzeichnet, daß sie Detektoren zur Erfassung der Zeitpunkte des Eintreffens der magnetischen Marken in der anderen Zone aufweist, von denen einer ortsfest und die anderen (10A, 10B, 10C, 10D) miteinander verbunden und mit Hilfe einer Mikrometerschraube (21) gemeinsam verstellbar sind.

9. Vorrichtung nach einem der Ansprüche 6 bis 8, dadurch gekennzeichnet, daß sie ein Organ (30) zur Filterung der Signale, die durch eine Marke in einem Detektor erzeugt werden, einen ersten Kreis (31, 33, 35) zur Verstärkung bis zur Sättigung und dann Gleichrichtung und dann zur Erzeugung eines logischen Signals, das dem Nulldurchgang des Analogsignals entspricht, sowie einen zweiten Kreis (32, 34) zur geringeren Verstärkung der Signale und zum Vergleich dieser Signale mit einem Schwellensignal und Mittel zur Bestätigung der Signale des ersten Kreises aufgrund der Signale des zweiten Kreises aufweist.

FIG.1

FIG.2

FIG.3

EP 0 236 841 B1

FIG.4

FIG.5

FIG.6

FIG.7